# EUROPÄISCHE PATENTSCHRIFT

(11) **EP 3 606 685 B1**
(45) Veröffentlichungstag und Bekanntmachung des Hinweises auf die Patenterteilung: **20.01.2021**
(21) Anmeldenummer: 18717547.6
(22) Anmeldetag: 04.04.2018
(51) Int. Cl.: B21D 22/00, B44B 5/00, B60R 13/10

(54) **VORRICHTUNG DER HERSTELLUNG VON KFZ-KENNZEICHENSCHILDERN MIT EINER SCHILDPLATINE, DIE MIT EINER GEPRÄGTEN INDIVIDUELLEN KENNZEICHENLEGENDE VERSEHEN IST.**
APPARATUS FOR THE PRODUCTION OF MOTOR VEHICLE LICENSE PLATES USING A PLATE BLANK PROVIDED WITH AN EMBOSSED INDIVIDUAL LICENSE PLATE NUMBER
DISPOSITIF DE FABRICATION DE PLAQUES D'IMMATRICULATION DE VÉHICULES À MOTEUR EN AYANT RECOURS À DES PLAQUES DE MARQUAGE, QUI SONT POURVUES D'UNE LÉGENDE DE SYMBOLES INDIVIDUELLES ESTAMPÉE

(30) Priorität: 04.04.2017 DE 102017107268
(43) Veröffentlichungstag der Anmeldung: 12.02.2020
(73) Patentinhaber: Erich Utsch AG, 57080 Siegen (DE)
(72) Erfinder: PFUNDSTEIN, Bernd, 35630 Ehringshausen (DE); BÜRGER, Jochen, 57555 Mudersbach (DE); WOLLENWEBER, Thomas, 57076 Siegen (DE)
(74) Vertreter: Patentanwälte Bauer Vorberg Kayser
(86) Internationale Anmeldenummer: PCT/EP2018/058598
(87) Internationale Veröffentlichungsnummer: WO 2018/185158

(56) Entgegenhaltungen:
- EP-A1- 3 047 978
- DE-A1- 19 808 801
- DE-A1-102008 025 104
- US-A- 6 112 652
- US-A1- 2013 049 261

## Beschreibung

Gegenstand der vorliegenden Erfindung ist eine Vorrichtung zur Herstellung von Kfz-Kennzeichenschildern mit einer Schildplatine, die mit einer geprägten individuellen Kennzeichenlegende versehen ist. Weiterhin ist Gegenstand der vorliegenden Erfindung ein Verfahren zur Herstellung von derartigen Kfz-Kennzeichenschildern.

Aufgabe der vorliegenden Erfindung ist es, eine Vorrichtung anzugeben zur Herstellung von Kfz-Kennzeichenschildern mit einer Schildplatine, die mit einer geprägten individuellen Kennzeichenlegende versehen ist, wobei die Vorrichtung eine erhöhte Manipulationssicherheit aufweisen soll. Aufgabe der vorliegenden Erfindung ist es weiterhin, ein Verfahren anzugeben zur Herstellung von Kfz-Kennzeichenschildern mit einer Schildplatine, die mit einer geprägten individuellen Kennzeichenlegende versehen ist, wobei das Verfahren eine erhöhte Manipulationssicherheit aufweisen soll.

Gelöst wird diese Aufgabe durch eine Vorrichtung mit den Merkmalen des Hauptanspruchs. Die Unteransprüche betreffen eine Mehrzahl von vorteilhaften Ausgestaltungen und Weiterbildungen dieser Vorrichtung, die für sich genommen eigene Vorteile realisieren.

Weiterhin betrifft die Erfindung ein Verfahren zur Herstellung von Kfz-Kennzeichenschildern mit einer Schildplatine, die mit einer geprägten individuellen Kennzeichenlegende versehen ist. Das Verfahren wird im Rahmen der vorliegenden Anmeldung anhand seiner praktischen Umsetzung mit einer erfindungsgemäßen Vorrichtung in deren verschiedenen vorteilhaften Ausgestaltungen und Weiterbildungen erläutert. Beansprucht wird aber auch die reine Verfahrensführung ohne Bezugnahme auf die zur Umsetzung der einzelnen Verfahrensschritte benötigten technischen Mittel. Der Anmelder behält sich ausdrücklich das Recht vor, im Rahmen des Erteilungsverfahrens Verfahrensansprüche in die vorliegende Anmeldung aufzunehmen. Das erfindungsgemäße Verfahren wird im Rahmen der vorliegenden Anmeldung anhand seiner praktischen Umsetzung mit einer erfindungsgemäßen Vorrichtung in deren verschiedenen vorteilhaften Ausgestaltungen und Weiterbildungen offenbart und erläutert. Beansprucht wird aber auch die reine Verfahrensführung ohne Bezugnahme auf die zur Umsetzung der einzelnen Verfahrensschritte benötigten technischen Mittel.

Das Dokument US 2013/049261 offenbart die folgenden Merkmale der erfindungsgemäßen Vorrichtung:
a. ein Magazin zur Bevorratung einer Vielzahl von Prägewerkzeugen, wobei jedes Prägewerkzeug zur mechanischen Prägung der Schildplatine mit zumindest einem Zeichen der individuellen Kennzeichenlegende vorgesehen ist,
b. eine Prägepresse, die dazu eingerichtet ist, mittels einer Mehrzahl von Prägewerkzeugen in einem Prägevorgang die individuelle Kennzeichenlegende in die Schildplatine zu prägen,
c. eine Prägewerkzeugeinheit, die dazu eingerichtet ist,
   i. dem Magazin automatisch eine Mehrzahl von Prägewerkzeugen zu entnehmen, die benötigt werden, um die individuelle Kennzeichenlegende zu prägen, und
   ii. die entnommenen Prägewerkzeuge automatisch der Prägepresse für eine Prägung einer in der Prägepresse befindlichen Schildplatine mit der individuellen Kennzeichenlegende zuzuführen,
d. ein Deckelwerkzeug, welches eine Belade-/Entladeposition und eine Prägeposition einnehmen kann und welches dergestalt ausgebildet ist, dass
   i. in der Belade-/Entladeposition eine ungeprägte Schildplatine in das Deckelwerkzeug eingelegt sowie eine geprägte Schildplatine aus diesem entnommen werden kann, und
   ii. in der Prägeposition die ungeprägte Schildplatine in der Prägepresse positioniert und mechanisch fixiert wird, so dass mittels der Prägepresse und der von der Prägewerkzeugeinheit der Prägepresse zugeführten Mehrzahl von Prägewerkzeugen die individuelle Kennzeichenlegende in die Schildplatine geprägt werden kann, und
e. eine zentrale Steuereinheit, welche zur Ansteuerung der Prägewerkzeugeinheit, des Deckelwerkzeugs sowie der Prägepresse eingerichtet ist.

Zusätzlich zu diesen bekannten Merkmalen umfasst die vorliegende Erfindung in ihrer einfachsten Form ein Gehäuse, welches einen Öffnungs- und einen Schließzustand einnehmen kann. Das Gehäuse ist so ausgestaltet, dass es im Schließzustand zumindest das Deckelwerkzeug und die Prägepresse vor einem direkten Zugriff eines Bedieners schützt.

Grundsätzlich ist eine erfindungsgemäße Vorrichtung zur Herstellung eines Kfz-Kennzeichenschilds vorgesehenen. In vorteilhaften Weiterbildungen kann die Vorrichtung auch dazu ausgebildet sein, in einem Arbeitsgang gleichzeitig eine Mehrzahl von Kfz-Kennzeichenschildern herzustellen, deren geprägte individuelle Kennzeichenlegende gleich oder auch verschieden sein kann.

Die erfindungsgemäße Vorrichtung ist insbesondere dazu vorgesehen, metallische oder aus einem mechanisch prägbaren Kunststoff bestehende Schildplatinen mechanisch zu prägen, um diese mit einer individuellen Kennzeichenlegende zu versehen. Dabei kann die Prägepresse beispielsweise als hydraulische Presse oder als elektromotorisch angetriebene Presse ausgebildet sein.

Insbesondere können die Schildplatinen zumindest eine Oberfläche aufweisen, die retroreflektierend ausgestaltet ist.

Die mit der erfindungsgemäßen Vorrichtung zu mechanisch prägenden Schildplatinen können weiterhin mit einer Kunststofffolie beschichtet sein, die insbesondere farbig oder retroreflektierend ausgestaltet sein kann. Die Folie kann auf eine Oberfläche der Schildplatine auflaminiert sein.

Die mittels Prägung erzeugte Kennzeichenlegende kann in einem nachfolgenden Bearbeitungsschritt noch bevorzugt andersfarbig eingefärbt werden. Hierzu kann die erfindungsgemäße Vorrichtung weiterhin eine Druckstation zur Einfärbung der geprägten Kennzeichenlegende der entnommenen geprägten Schildplatine ausgebildet ist. Diese Druckstation kann insbesondere zu einem Farbübertrag auf die geprägte Schildplatine, hier insbesondere deren erhaben geprägte Bereiche, insbesondere die Kennzeichenlegende, von einer Thermotransferfolie eingerichtet sein.

Für die Erhöhung der Arbeitssicherheit als auch der Manipulationssicherheit hat es sich als vorteilhaft erwiesen, wenn die Vorrichtung weiterhin eine Gehäuseüberwachungsvorrichtung umfasst, die dazu eingerichtet ist zu detektieren, wenn sich das Gehäuse im Schließzustand befindet, oder wenn der Schließzustand aufgehoben wird.

In diesem Zusammenhang ist es insbesondere vorteilhaft, wenn die zentrale Steuereinheit dazu eingerichtet ist, eine Betätigung der Prägepresse oder/und des Deckelwerkzeugs nur zuzulassen, wenn die Gehäuseüberwachungsvorrichtung detektiert, dass sich das Gehäuse im Schließzustand befindet.

In einer bevorzugten Weiterbildung umfasst die erfindungsgemäße Vorrichtung weiterhin eine Leseeinheit zum Auslesen eines an einer Schildplatine angeordneten eindeutigen Identifiers. Ein solcher Identifier kann beispielsweise als optisch wahrnehmbarer Code, z.B. als Barcode, als QR-Code oder als alphanumerischer Code, ausgebildet sein. Er kann aber auch als berührungslos mittels Funkwellen auslesbare ID ausgebildet sein, die in einem an der Schildplatine angeordneten RFID-tag abgelegt ist. Ein solcher Identifier kann insbesondere bereits bei der Herstellung der Schildplatinen angebracht worden sein, z.B. in Form einer laufenden Seriennummer.

Vorteilhaft ist die in dieser zweiten bevorzugten Weiterbildung vorgesehene Leseeinheit dazu eingerichtet, den an der Schildplatine angeordneten eindeutigen Identifier berührungslos, z.B. mittels optischer Mittel oder mittels Funkwellen, zu erfassen.

Bevorzugt ist nun die Steuereinheit der erfindungsgemäßen Vorrichtung dazu eingerichtet ist, eine Betätigung der Prägepresse oder/ und des Deckelwerkzeugs nur zuzulassen, wenn die Leseeinheit den Identifier der der Prägepresse mittels des Deckelwerkzeugs zuzuführenden Schildplatine erfolgreich ausgelesen hat. Hiermit kann eine besonders hohe Manipulationssicherheit realisiert werden.

Diese kann nochmals verbessert werden, wenn ein Gehäuse für die Vorrichtung vorgesehen ist, welches so ausgebildet ist, dass es in seinem Schließzustand einen Zugriff auf eine zu prägende Schildplatine in dem räumlichen Abschnitt zwischen der Leseeinheit und der Prägepresse verhindert.

Darüber hinaus kann die Manipulationssicherheit verbessert werden, wenn das Gehäuse der Vorrichtung so ausgebildet ist, dass es im Schließzustand einen Zugriff auf das Magazin oder / und die Prägewerkzeugeinheit verhindert.

In einer konsequenten Weiterentwicklung dieses Gedankens ist die zentrale Steuereinheit dazu eingerichtet ist, eine Betätigung der Werkzeugeinheit oder / und der Prägepresse oder/ und des Deckelwerkzeugs nur zuzulassen, wenn die Gehäuseüberwachungsvorrichtung im gesamten Zeitraum, den eine zu prägende Schildplatine benötigt, um den räumlichen Bereich ab dem Auslesen des Identifiers der Schildplatine bis zum Schließen des Deckelwerkzeugs stets angezeigt hat, dass sich das Gehäuse im Schließzustand befindet. Um diesen Zeitraum zu bestimmen, kann insbesondere eine Vorrichtung vorgesehen sein, mit der die Position der zu prägenden Schildplatine in der Erfindungsgemäßen Vorrichtung verfolgt wird.

In einer ersten bevorzugten Weiterbildung umfasst die Vorrichtung weiterhin eine Platinenbeladeeinheit und eine erste Umsetzeinheit. Dabei kann die Platinenbeladeeinheit eine Aufnahmeposition und eine Entnahmeposition einnehmen und ist dazu eingerichtet ist, in der Aufnahmeposition zumindest eine ungeprägte Schildplatine aufzunehmen und diese in eine Entnahmeposition zu überführen.

Insbesondere ist die erfindungsgemäße Vorrichtung dazu vorgesehen, dass ein Bediener der Vorrichtung der Platinenbeladeeinheit händisch ungeprägte Schildplatinen, sogenannte Schildrohlinge, zuführt, wenn sich die Platinenbeladeeinheit in der Aufnahmeposition befindet. Vorteilhaft ist ein Zugriff des Bedieners auf die Platinenbeladeeinheit nicht möglich, wenn sich diese in ihrer Entnahmeposition befindet.

Die erste Umsetzeinheit ist dazu eingerichtet ist, eine in der Platinenbeladeeinheit befindliche Schildplatine zu entnehmen, wenn sich diese in der Entnahmeposition befindet, und diese Schildplatine in das Deckelwerkzeug einzulegen, wenn sich dieses in der Belade-/Entladeposition befindet.

In einer bevorzugten Weiterbildung weist die Platinenbeladeeinheit eine Betätigung auf für eine Überführung der Platinenbeladeeinheit von der Aufnahmeposition in die Entnahmeposition und umgekehrt. Vorteilhaft kann diese Betätigung als Handgriff ausgebildet sein, der für eine mechanische Betätigung der Platinenbeladeeinheit an derselben angeordnet ist.

Es hat sich als für die Arbeitssicherheit als besonders vorteilhaft erwiesen, wenn sich eine in der Platinenbeladeeinheit aufgenommene ungeprägte Schildplatine in der Aufnahmeposition der Platinenbeladeeinheit außerhalb des Gehäuses und in der Entnahmeposition der Platinenbeladeeinheit innerhalb des Gehäuses befindet.

In einer weiteren bevorzugten Ausgestaltung ist die Platinenbeladeeinheit so ausgestaltet, dass sie beim Übergang von der Aufnahmeposition in die Entnahmeposition eine Linearbewegung ausführt. Dies ist insbesondere dann gegeben, wenn die die Platinenbeladeeinheit als Schublade ausgebildet ist.

Eine weitere Erhöhung der Arbeitssicherheit als auch der Manipulationssicherheit kann erzielt werden, wenn die vorgenannte Schublade aus dem Gehäuse der Vorrichtung herausziehbar ausgebildet ist. Vorteilhaft befindet sich die Platinenbeladeeinheit in ihrer Aufnahmeposition, wenn die Schublade (vollständig) aus dem Gehäuse der Vorrichtung herausgezogen ist, und in ihrer Entnahmeposition, wenn sie (vollständig) in das Gehäuse der Vorrichtung hineingeschoben ist.

Vorteilhaft bildet die Platinenbeladeeinheit der erfindungsgemäßen Vorrichtung zumindest ein Aufnahmefach für eine Schildplatine aus. Bevorzugt bildet die Platinenbeladeeinheit mehrere Aufnahmefächer für je eine Schildplatine aus.

Alternativ kann das Aufnahmefach/können die Aufnahmefächer auch zur Aufnahme von mehr als je einer Schildplatine ausgebildet sein.

In einer weiteren bevorzugten Weiterbildung umfasst die erfindungsgemäße Vorrichtung weiterhin eine Beladungsüberwachungseinrichtung, die dazu eingerichtet ist, den Beladungszustand der in der Platinenbeladeeinheit ausgebildeten Aufnahmefächer mit Schildplatinen zu detektieren.

Beispielsweise kann die Beladungsüberwachungseinrichtung den Beladungszustand der Platinenbeladeeinheit mittels elektromagnetischer Strahlung, insbesondere Licht oder Mikrowellen, mittels Wirbelstrom, mittels induktiv oder kapazitiv arbeitenden Annäherungssensoren oder mittels mechanischer Abtastung erfassen.

Als besonders vorteilhaft hat es sich erwiesen, wenn die Beladungsüberwachungseinrichtung so ausgebildet ist, dass der Beladungszustand detektiert wird, wenn sich die Platinenbeladeeinheit in der Entnahmeposition befindet.

In einer weiteren vorteilhaften Ausgestaltung der erfindungsgemäßen Vorrichtung umfasst diese weiterhin eine erste Verriegelungseinheit, die dazu eingerichtet ist, die Platinenbeladeeinheit in der Entnahmeposition zu arretieren.

Erneut kann die Arbeits- und Manipulationssicherheit verbessert werden, indem die zentrale Steuereinheit dazu eingerichtet ist, die erste Verriegelungseinheit so anzusteuern, dass die Platinenbeladeeinheit in der Entnahmeposition arretiert wird, wenn die Beladungsüberwachungseinrichtung detektiert, dass zumindest ein Aufnahmefach mit einer Schildplatine bestückt ist.

Bevorzugt ist die zentrale Steuereinheit dazu eingerichtet, die Platinenbeladeeinheit in der Entnahmeposition zu arretieren, wenn die Beladungsüberwachungseinrichtung detektiert, dass alle Aufnahmefächer mit Schildplatinen bestückt sind Eine weitere Verbesserung ergibt sich, wenn die zentrale Steuereinheit dazu eingerichtet ist, eine Betätigung der ersten Umsetzeinheit nur zuzulassen, wenn die Beladungsüberwachungseinrichtung detektiert, dass zumindest ein Aufnahmefach mit einer Schildplatine bestückt ist.

Bevorzugt ist die zentrale Steuereinheit dazu eingerichtet, eine Betätigung der ersten Umsetzeinheit nur zuzulassen, wenn die Beladungsüberwachungseinrichtung detektiert, dass alle Aufnahmefächer mit Schildplatinen bestückt sind Datenbank

Ein mechanisch besonders einfacher Aufbau der erfindungsgemäßen Vorrichtung ergibt sich, wenn die erste Umsetzeinheit dergestalt ausgebildet ist, dass die Schildplatine beim Umsetzen von der Platinenbeladeeinheit in das Deckelwerkzeug eine Linearbewegung ausführt, bevorzugt ausschließlich eine Linearbewegung.

Die Arbeitssicherheit kann weiter erhöht werden, wenn die erfindungsgemäße Vorrichtung eine zweite Verriegelungseinheit umfasst, die dazu eingerichtet ist, die Platinenbeladeeinheit in der Aufnahmeposition zu arretieren.

Insbesondere können die erste und die zweite Verriegelungseinheit identisch sein, und nochmals bevorzugt als eine einzige Verriegelungsbaugruppe ausgeführt sein, die die Funktion sowohl der ersten als auch der zweiten Verriegelungseinheit übernimmt. Beispielhaft sei hier ein motorischer Antrieb der Platinenbeladeeinheit genannt, der z.B. als Riemenantrieb einer rein lineargeführten Platinenbeladeeinheit ausgeführt sein kann.

In einer weiteren vorteilhaften Weiterbildung, in der die Bedienungsfreundlichkeit der Vorrichtung nochmals erhöht ist, umfasst die erfindungsgemäße Vorrichtung weiterhin eine Signaleinheit, die dazu eingerichtet ist, ein optisches, akustisches oder haptisch wahrnehmbares Signal für den Bediener zu erzeugen, wenn die Platinenbeladeeinheit in der Entnahmeposition oder Aufnahmeposition arretiert ist.

In einer weiteren vorteilhaften Weiterbildung, in der die Bedienungsfreundlichkeit der Vorrichtung nochmals erhöht ist, umfasst die erfindungsgemäße Vorrichtung weiterhin eine Entriegelungshandhabe, die für eine manuelle Betätigung durch einen Bediener der Vorrichtung vorgesehen ist. Weiterhin ist die zentrale Steuereinheit dazu eingerichtet ist, die erste oder/ und die zweite Verriegelungseinheit so anzusteuern, dass die in der Entnahmeposition oder Aufnahmeposition arretierte Platinenbeladeeinheit freigegeben wird, wenn die Entriegelungshandhabe betätigt wird.

Bevorzugt ist die Entriegelungshandhabe als Fußschalter oder als Handschalter ausgebildet.

Besonders bevorzugt ist die als Handschalter ausgebildete Entriegelungshandhabe an der Platinenbeladeeinheit angeordnet.

Ganz besonders bevorzugt ist die Entriegelungshandhabe an der Betätigung der Platinenbeladeeinheit angeordnet.

In einer besonders vorteilhaften Ausgestaltung d, die sich durch einen besonders hohen Manipulationsschutz auszeichnet, hat die zentrale Steuereinheit einen schreibenden Zugriff auf eine zugeordnete Datenbank, um in der Datenbank den ausgelesenen Identifier einer zu prägenden Schildplatine sowie die in die Schildplatine zu prägende Kennzeichenlegende abzulegen. Diese Datenbank kann beispielsweise einer staatlichen Zulassungsstelle für Kfz zugeordnet oder bei dieser angesiedelt sein.

In diesem Zusammenhang ergeben sich besondere Vorteile, wenn die zentrale Steuereinheit dazu eingerichtet ist, eine Betätigung der Werkzeugeinheit oder / und der Prägepresse oder/ und des Deckelwerkzeugs nur dann zuzulassen, wenn die zentrale Steuereinheit erfolgreich den ausgelesenen Identifier der zu prägenden Schildplatine sowie die in die Schildplatine zu prägende Kennzeichenlegende in der Datenbank abgelegt hat.

In den bisherigen Ausgestaltungen der erfindungsgemäßen Vorrichtung ist stets davon ausgegangen worden, dass die der Vorrichtung zur Prägung der Kennzeichenlegende zugeführten Schildplatinen bereits mit einem individuellen Identifier versehen sind, dessen Generierung und Anbringung an der Schildplatine nicht von der erfindungsgemäßen Herstellvorrichtung realisiert wurde.

In einer weiteren bevorzugten Weiterbildung der erfindungsgemäßen Vorrichtung jedoch umfasst diese weiterhin eine Markierungseinrichtung, die dazu vorgesehen ist, einen eindeutigen Identifier an einer in der Vorrichtung befindlichen, bevorzugt innerhalb des Gehäuses der Vorrichtung befindlichen, Schildplatine anzubringen. Bei diesem Identifier kann es sich insbesondere um den vorstehend beschriebenen eindeutigen Identifier handeln, der die einzelne individuelle Schildplatine kennzeichnet.

Diese Markierungseinrichtung kann beispielsweise einen Drucker, einen Beschriftungslaser oder eine Prägeeinheit umfassen.

In einer besonders bevorzugten Weiterbildung umfasst die Vorrichtung weiterhin eine bevorzugt innerhalb des Gehäuses der Vorrichtung angeordnete Vernichtungseinheit umfasst, die die als "ungültig" markierte Schildplatine irreversibel unbrauchbar macht. Diese Vernichtungseinheit kann z.B. dazu eingerichtet sein, die als ungültig markierte Schildplatine in mehrere separate Teile aufzuteilen, oder die Schildplatine irreversibel zu verformen, z.B. zu knicken oder zu kompaktieren.

In dieser bevorzugten Weiterbildung hat es sich als besonders vorteilhaft erwiesen, wenn die zentrale Steuereinheit dazu eingerichtet ist, die Vernichtungseinheit nur dann zur irreversiblen Unbrauchbarmachung einer mit einem individuellen Identifier versehende Schildplatine ansteuert, wenn ein Benutzer der Vorrichtung oder eine von der Vorrichtung umfasste Fehlerüberwachungseinheit den Identifier der bereits geprägten Schildplatine vorab in der Steuereinheit als "ungültig" markiert hat.

In einer besonders bevorzugten Weiterbildung erfolgt eine irreversible Unbrauchbarmachung der als "ungültig" markierten Schildplatine nur unter der Voraussetzung, dass die Vorrichtung mittels der Markierungseinrichtung eine weitere Schildplatine mit demselben Identifier markiert hat.

In einer besonders bevorzugten Weiterbildung erfolgt eine Markierung einer weiteren Schildplatine mit einem Identifier nur unter der Voraussetzung, dass die Vorrichtung zuvor eine mit demselben Identifier versehene und als "ungültig" markierte Schildplatine mittels der Vernichtungseinheit irreversibel unbrauchbar gemacht hat.

In einer weiteren vorteilhaften Weiterbildung der erfindungsgemäßen Vorrichtung umfasst die Vorrichtung weiterhin eine zweite Umsetzeinheit und eine nachgelagerte Bearbeitungsstation, wobei die zweite Umsetzeinheit dazu eingerichtet ist, eine im Deckelwerkzeug befindliche geprägte Schildplatine zu entnehmen, wenn sich dieses in der Belade-/Entladeposition befindet, und der nachgelagerten Bearbeitungsstation, hier insbesondere einer Druckstation, zuzuführen.

In einer weiteren vorteilhaften Weiterbildung der erfindungsgemäßen Vorrichtung ist die Vorrichtung dazu eingerichtet, in einer einzigen Betätigung der Prägepresse gleichzeitig eine Mehrzahl von Kfz-Kennzeichenschildern, insbesondere zwei Kfz-Kennzeichenschilder, mit identischer geprägter Kennzeichenlegende herzustellen.

Hierzu hat es sich als vorteilhaft erwiesen, wenn die Prägewerkzeuge der erfindungsgemäßen Vorrichtung so ausgebildet sind, dass mit ihnen in einem Prägevorgang zwei der Prägepresse zugleich zugeführte Schildplatinen parallel mit demselben Zeichen geprägt werden können. In dieser Ausgestaltung umfasst ein Prägewerkzeug also zwei oder mehr Negativformen eines spezifischen zu prägenden Zeichens für eine Kfz-Kennzeichenlegende.

In dieser bevorzugten Weiterbildung ist das Deckelwerkzeug bevorzugt so ausgebildet, dass in der Belade-/Entladeposition eine Mehrzahl ungeprägter Schildplatinen, bevorzugt zwei Schildplatinen, in das Deckelwerkzeug eingelegt werden kann. Weiterhin ist es so ausgebildet, dass das Deckelwerkzeug in seiner Prägeposition die Mehrzahl (bevorzugt zwei) ungeprägter Schildplatinen in der Prägepresse zu positionieren und mechanisch zu fixieren, so dass mittels der Prägepresse in einem Prägevorgang die individuelle Kennzeichenlegende im Wesentlichen gleichzeitig in alle (beide) Schildplatinen geprägt werden kann.

Zu diesem Zweck kann die Platinenbeladeeinheit dazu eingerichtet sein, in der Aufnahme- und in der Entnahmeposition eine Mehrzahl von Schildplatinen, insbesondere zwei Schildplatinen, in Aufnahmefächern aufzunehmen. Weiterhin ist die erste Umsetzeinheit dazu eingerichtet, die in der Platinenbeladeeinheit befindliche Mehrzahl von Schildplatinen aus dieser zu entnehmen und die Schildplatinen in das Deckelwerkzeug einzulegen, wenn sich dieses in der Belade-/Entladeposition befindet.

Ein hohes Maß an Manipulationssicherheit wird erzielt, wenn die zentrale Steuereinheit dazu eingerichtet ist, eine Betätigung der ersten Umsetzeinheit nur dann zuzulassen, wenn die Beladungsüberwachungseinrichtung detektiert, dass zumindest ein Aufnahmefach, bevorzugt alle Aufnahmefächer, mit Schildplatinen bestückt ist/sind.

Grundsätzlich ist die erfindungsgemäße Vorrichtung in dieser bevorzugten Weiterbildung insbesondere dazu eingerichtet, bezüglich ihrer Kennzeichenlegende übereinstimmende Pärchen von Kfz-Kennzeichenschildern herzustellen. Diese Pärchen können z.B. für eine Verwendung an der Fahrzeugfront und am Fahrzeugheck vorgesehen sein. Die Schildplatinen eines Pärchens können gleiche Abmessungen aufweisen, werden aber in der Regel verschiedene Abmessungen aufweisen. Sie weisen aber bevorzugt eine identische Legende auf, wobei die Abmessungen der alphanumerischen Zeichen der Legende wiederum identisch sein können, aber nicht müssen. Oftmals weist das vordere Kennzeichenschild eines Kfz eine verringerte Schildhöhe bei gleicher Schildbreite auf. In diesem Fall weisen die alphanumerischen Zeichen der Legende des vorderen bzw. hinteren Kfz-Kennzeichenschilds bevorzugt unterschiedliche Höhen auf, d.h. bevorzugt weisen die Zeichen der Legende des vorderen Schilds eine geringere Höhe auf als die Zeichen des hinteren Schilds. Die tatsächlichen (relativen) Abmessungen können aber auch umgekehrt sein und hängen in der Regel von den nationalen Zulassungsbestimmungen ab.

In der vorstehend diskutierten bevorzugten Weiterbildung, die grundsätzlich besonders zur Herstellung von Kennzeichen-Pärchen geeignet ist, kann sich dennoch - z.B. im Falle von Fehlprägungen etc. eines einzelnen Schilds eines Pärchens - die Notwendigkeit ergeben nur ein einzelnes Schild eines Pärchens nachzuprägen. In diesem Zusammenhang hat es sich als vorteilhaft erwiesen, wenn die zentrale Steuereinheit der erfindungsgemäßen Vorrichtung dazu eingerichtet ist, auf Anforderung eines Benutzers die erste Umsetzeinheit dergestalt anzusteuern, dass sie der Platinenbeladeeinheit weniger als die Gesamtzahl der dort aufgenommenen Schildplatinen entnimmt, insbesondere nur eine Schildplatine eines noch ungeprägten Schildplatinenpärchens, und diese(s) in das Deckelwerkzeug einlegt.

In der vorstehend diskutierten bevorzugten Weiterbildung der erfindungsgemäßen Vorrichtung ist das Deckelwerkzeug bevorzugt so ausgestaltet, dass die Prägepresse beim Prägen der vom Deckelwerkzeug gehaltenen Schildplatinen symmetrisch belastet wird. In der Regel bildet das Deckelwerkzeug zwei Werkzeughälften aus, nämlich eine zum beweglichen Prägestempel der Prägepresse orientierte erste Werkzeughälfte und eine zur in der Regel feststehenden Andruckfläche der Prägepresse orientierte zweite Werkzeughälfte ausbildet, die dazu ausgebildet sind, beim Prägen der Schildplatinen mittels der Prägepresse alle Schildplatinen zwischen sich aufzunehmen und mechanisch zu halten.

Insbesondere wenn die Prägepresse einen linear bewegten Prägestempel aufweist, kann dieser bei einer unvollständigen Belegung des Deckelwerkzeugs mit zu prägenden Schildplatinen außermittig belastet werden, woraus ein Kippmoment resultiert. Dieses kann sich negativ auf die Lebensdauer und die Betriebssicherheit der Prägepresse auswirken.

Um diese Nachteile zu vermeiden hat es sich als vorteilhaft erwiesen, wenn die erste oder/und die zweite Werkzeughälfte des Deckelwerkzeugs eine Anschlagfläche ausbildet/n, die eine Verkippung der beiden Werkzeughälften gegeneinander begrenzt/en. Grundsätzlich ist es möglich, auf diese Weise die Verkippung von oberer und unterer Werkzeughälfte auf einen Wert zu beschränken, der unter der typischen Dicke der zu prägenden Schildplatinen liegt.

Die Möglichkeit, anstelle einer Mehrzahl / einem Pärchen von identischen Kennzeichenschildern nur ein einzelnes Kfz-Kennzeichenschild mit der hier diskutierten Vorrichtung herzustellen, kann unter Umständen eine unerwünschte Möglichkeit zur Herstellung von illegalen Kfz-Kennzeichenschildern wie Dubletten etc. sein. Um diesen potentiellen Nachteil zu vermeiden hat es sich als vorteilhaft erwiesen, wenn die zentrale Steuereinheit der erfindungsgemäßen Vorrichtung dazu eingerichtet ist, nur dann die erste Umsetzeinheit dergestalt anzusteuern, dass sie der Platinenbeladeeinheit weniger (z.B. nur eines) als die Gesamtzahl (z.B. Pärchen) der dort aufgenommenen Schildplatinen entnimmt und dem Deckelwerkzeug zuführt, wenn der Benutzer oder alternativ eine von der Vorrichtung umfasste Fehlerüberwachungseinheit oder alternativ beide den Identifier einer bereits geprägten Schildplatine vorab in der Steuereinheit als "ungültig" markiert hat.

Ist die zentrale Steuereinheit wie vorstehend bereits beschrieben zur Kommunikation mit einer zugeordneten Datenbank eingerichtet, so hat es sich im Zusammenhang mit der vorstehend diskutierten Problematik als besonders sinnvoll erwiesen, wenn die zentrale Steuereinheit dazu eingerichtet ist, eine geprägte Schildplatine, die durch einen entsprechenden Identifier als "ungültig" identifizierte ist, in der zugeordneten Datenbank mit einem korrespondierenden Flag zu kennzeichnen.

In einer besonders vorteilhaften Weiterbildung einer erfindungsgemäßen Vorrichtung, mit der zeitgleich mehrere (mindestens zwei) Schildplatinen geprägt werden können, ist die zentrale Steuereinheit der Vorrichtung dazu eingerichtet, nur dann die erste Umsetzeinheit dergestalt anzusteuern, dass sie der Platinenbeladeeinheit weniger als die Gesamtzahl der dort aufgenommenen Schildplatinen entnimmt und dem Deckelwerkzeug zuführt, wenn der Benutzer oder alternativ oder ergänzend eine von der Vorrichtung umfasste Fehlerüberwachungseinheit den Identifier einer bereits geprägten Schildplatine vorab in der Steuereinheit als "ungültig" markiert hat.

Eine ganz besonders hohe Fälschungssicherheit ergibt sich, wenn die Vorrichtung die Umsetzeinheit nur dann wie vorstehend beschrieben ansteuert, wenn die Vorrichtung mittels der Markierungseinrichtung eine weitere Schildplatine mit demselben Identifier markiert hat und sich diese in der Platinenbeladeeinheit befindet. Bevorzugt ist diese weitere Schildplatine bezüglich ihrer Eigenschaften (hier insbesondere Abmessungen, Farbe bzw. Reflexionsvermögen) identisch mit der als "ungültig" markierten Schildplatine. Die Umsetzeinheit wird dann so angesteuert, dass genau diese "nachgeladene" Schildplatine, die also denselben Identifier wie die als "ungültig" gekennzeichnete Schildplatine aufweist, mittels der Umsetzeinheit aus der Platinenbeladeeinheit entnommen und dem Deckelwerkzeug zur Nachprägung der einen als "ungültig" identifizierten und markierten geprägten Schildplatine zugeführt.

Abschließend wird darauf hingewiesen, dass es im Rahmen des Fachmännischen Könnens liegt, die in der vorstehenden allgemeinen Beschreibung verschiedener bevorzugter Weiterbildungen der erfindungsgemäßen Vorrichtung offenbarten Merkmale einzelner bevorzugter Weiterbildungen sowohl einzeln als auch in Kombination im Rahmen des technisch Sinnvollen miteinander zu kombinieren. Hierzu ist es nicht zwingend erforderlich, dass in der vorstehenden allgemeinen Beschreibung der Erfindung die Merkmale der verschiedenen Weiterbildungen als miteinander verbunden gekennzeichnet sind. Auch müssen die Merkmale nicht in aufeinander bezogenen Ansprüchen aufscheinen, vielmehr sollen die Merkmale aller Unteransprüche durch den Rückbezug auf den Hauptanspruch als in beliebigen Kombinationen offenbart gelten, soweit diese Kombinationen technisch möglich sind.

Auch die Merkmale des nachfolgend diskutierten Ausführungsbeispiels können im Rahmen des technisch Möglichen einzeln und in Kombination zur Weiterbildung der Erfindung gemäß Hauptanspruch herangezogen werden, auch wenn dies nicht explizit offenbart ist.

Weitere Vorteile und Merkmale ergeben sich aus den Unteransprüchen und dem Ausführungsbeispiel, welches im Folgenden anhand der Zeichnung näher erläutert wird. Das Ausführungsbeispiel soll den Fachmann in die Lage versetzen, die vorliegende Erfindung auszuführen. Es ist daher rein exemplarisch und nicht einschränkend zu verstehen.

In der Zeichnung zeigt:

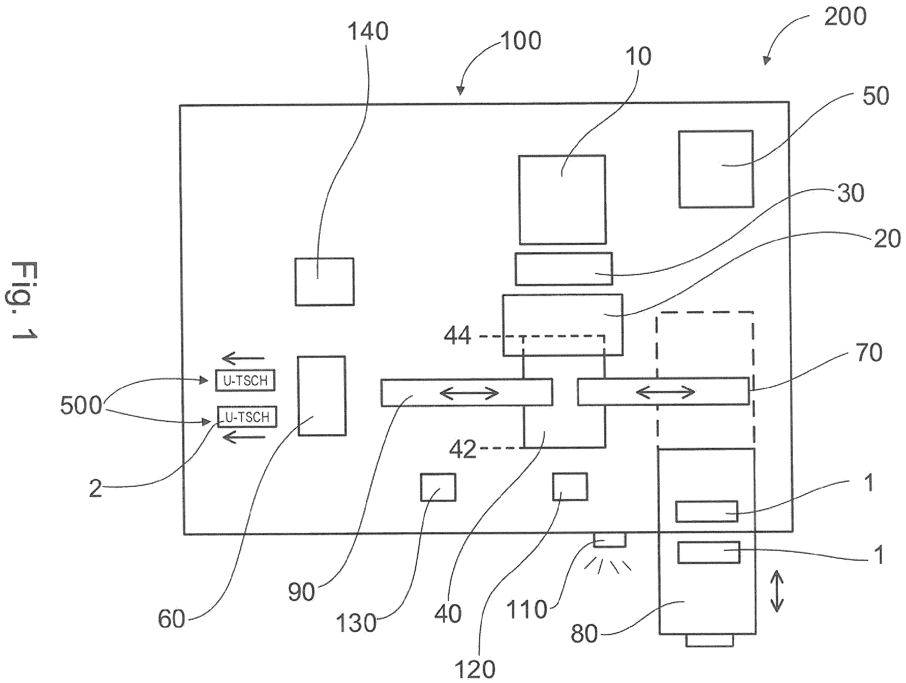

- Fig. 1:: ein Ausführungsbeispiel einer erfindungsgemäßen Vorrichtung.

Die in Fig. 1 gezeigte Vorrichtung 200 weist ein Magazin 10 zur Bevorratung einer Vielzahl von Prägewerkzeugen auf, wobei jedes Prägewerkzeug zur mechanischen Prägung einer Schildplatine 1 mit zumindest einem Zeichen der individuellen Kennzeichenlegende 2 vorgesehen ist. Weiterhin umfasst die Vorrichtung 200 ein Prägepresse 20, die dazu eingerichtet ist, mittels einer Mehrzahl von Prägewerkzeugen in einem Prägevorgang die individuelle Kennzeichenlegende 2 in die Schildplatine 1 zu prägen. Die Prägepresse 20 ist als hydraulische Presse ausgebildet.

Eine weiterhin vorgesehene Prägewerkzeugeinheit 30 ist dazu eingerichtet, dem Magazin 10 automatisch eine Mehrzahl von als Klotzwerkzeuge ausgebildete Prägewerkzeugen zu entnehmen, die benötigt werden, um die individuelle Kennzeichenlegende zu prägen, und die entnommenen Prägewerkzeuge automatisch der Prägepresse 20 für eine Prägung einer in der Prägepresse 20 befindlichen Schildplatine 1 mit der individuellen Kennzeichenlegende 2 zuzuführen.

Ein weiterhin vorgesehenes Deckelwerkzeug 40 kann eine Belade-/Entladeposition 42 und eine Prägeposition 44 einnehmen. Das Deckelwerkzeug 40 weist einen motorischen Antrieb auf, mit dem das Deckelwerkzeug zwischen der Belade-/Entladeposition 42 und der Prägeposition 44 hin und her bewegt werden kann.

Das Deckelwerkzeug 40 ist dergestalt ausgebildet, dass in der Belade-/Entladeposition 42 eine ungeprägte Schildplatine 1 in das Deckelwerkzeug 40 eingelegt sowie eine geprägte Schildplatine aus diesem entnommen werden kann. Das Deckelwerkzeug 40 positioniert in der Prägeposition 44 die ungeprägte Schildplatine 1 in der Prägepresse 20 und fixiert diese dort mechanisch. In einem nachfolgenden Bearbeitungsschritt wird mittels der Prägepresse 20 und der von der Prägewerkzeugeinheit 30 der Prägepresse 20 zugeführten Mehrzahl von Prägewerkzeugen die individuelle Kennzeichenlegende 2 in die Schildplatine 1 geprägt.

Weiterhin umfasst die Vorrichtung 200 eine zentrale Steuereinheit 50, welche zur Ansteuerung der Prägewerkzeugeinheit 30, des Deckelwerkzeugs 40 sowie der Prägepresse 20 eingerichtet ist.

Die gezeigte Vorrichtung 1 ist dazu vorgesehen, metallische oder aus einem mechanisch prägbaren Kunststoff bestehende Schildplatinen 1 mechanisch zu prägen, um diese mit einer individuellen Kennzeichenlegende zu versehen. Im diskutierten Ausführungsbeispiel sind die mechanisch zu prägenden Schildplatinen 1 einseitig mit einer retroreflektierenden, weißen Kunststofffolie beschichtet sein, auf eine Oberfläche der Schildplatine 1 auflaminiert ist

Die mittels Prägung von der gezeigten Vorrichtung 200 erzeugte Kennzeichenlegende 2 wird in einem nachfolgenden Bearbeitungsschritt noch schwarz eingefärbt. Hierzu umfasst die gezeigte Vorrichtung 200 weiterhin eine Druckstation 60 zur Einfärbung der geprägten Kennzeichenlegende 2 der entnommenen geprägten Schildplatine 1. Diese Druckstation 60 ist zu einem Farbübertrag auf die geprägte Schildplatine 1, hier auf die erhaben geprägten Bereiche, die die Kennzeichenlegende 2 ausbilden, von einer Thermotransferfolie eingerichtet.

Die gezeigte Vorrichtung 200 umfasst weiterhin eine zweite Umsetzeinheit 90, wobei die zweite Umsetzeinheit 90 dazu eingerichtet ist, eine im Deckelwerkzeug 40 befindliche geprägte Schildplatine 1 zu entnehmen, wenn sich dieses in der Belade-/Entladeposition 42 befindet, und der nachgelagerten Druckstation 60 zuzuführen.

Die gezeigte Vorrichtung 200 umfasst weiterhin ein Gehäuse 100, welches einen Öffnungs- und einen Schließzustand einnehmen kann. Das Gehäuse 100 ist so ausgestaltet, dass es im Schließzustand zumindest das Deckelwerkzeug 40 und die Prägepresse 20 vor einem direkten Zugriff eines Bedieners schützt. Somit entfällt die Notwendigkeit einer separaten Überwachungseinrichtung des Deckelwerkzeugs 40 sowie der Prägepresse, die sonst aus Arbeitsschutzgründen erforderlich wäre und z.B. als Lichtvorhang ausgebildet sein könnte Weiterhin umfasst die Vorrichtung 200 weiterhin eine Platinenbeladeeinheit 80 und eine erste Umsetzeinheit 70. Dabei kann die Platinenbeladeeinheit eine Aufnahmeposition sowie eine Entnahmeposition einnehmen und ist dazu eingerichtet ist, in der Aufnahmeposition zwei ungeprägte Schildplatinen 1 eines Schilderpärchens aufzunehmen und diese in eine Entnahmeposition zu überführen.

Im hier diskutierten Ausführungsbeispiel der Vorrichtung 200 ist vorgesehen, dass ein Bediener der Vorrichtung 200 der Platinenbeladeeinheit 80 händisch ungeprägte Pärchen von Schildplatinen 1 zuführt. Hierzu muss sich die Platinenbeladeeinheit 80 in der Aufnahmeposition befindet. Die Platinenbeladeeinheit 80 ist so ausgeführt, dass ein Zugriff des Bedieners auf die Platinenbeladeeinheit 80 nicht möglich ist, wenn sich diese in ihrer Entnahmeposition befindet.

In einem nicht gezeigten weiteren Ausführungsbeispiel erfolgt auch die Bestückung der Platinenbeladeeinheit 70 durch einen Bestückungsautomaten automatisiert.

Die erste Umsetzeinheit 70 ist dazu eingerichtet ist, die in der Platinenbeladeeinheit 80 befindlichen ungeprägten Schildplatinen 1 paarweise zu entnehmen, wenn sich die Platinenbeladeeinheit 80 in ihrer Entnahmeposition befindet. Die erste Umsetzeinheit 70 legt die der Platinenbeladeeinheit 80 entnommenen Schildplatinen 1 in das Deckelwerkzeug 40 einzulegen, welches sich dazu in der Belade-/Entladeposition befinden muss.

Im gezeigten Ausführungsbeispiel ist die Platinenbeladeeinheit 80 als linear geführte Schublade ausgebildet und weist eine als Handgriff ausgebildete Betätigung auf für eine händische Überführung der Platinenbeladeeinheit 80 von der Aufnahmeposition in die Entnahmeposition und umgekehrt durch einen Benutzer.

Die als Schublade ausgebildete Platinenbeladeeinheit 80 ist so ausgeführt, dass sich eine in der Platinenbeladeeinheit 80 aufgenommene ungeprägte Schildplatine 1 in der Aufnahmeposition der Platinenbeladeeinheit 80 vollständig außerhalb des Gehäuse 100s und in der Entnahmeposition der Platinenbeladeeinheit 80 vollständig innerhalb des Gehäuses 100 befindet. Diese Ausgestaltung hat sich als besonders vorteilhaft in Bezug auf Arbeitssicherheit und Manipulationsschutz erwiesen.

Zur weiteren Erhöhung sowohl der Arbeitssicherheit als auch der Manipulationssicherheit umfasst die Vorrichtung 200 weiterhin eine Gehäuseüberwachungsvorrichtung, die dazu eingerichtet ist zu detektieren, wenn sich das Gehäuse 100 im Schließzustand befindet, oder wenn der Schließzustand des Gehäuses 100 aufgehoben wird.

Die zentrale Steuereinheit 50 der gezeigten Vorrichtung 200 ist nun dazu eingerichtet ist, eine Betätigung der Prägepresse 20 oder/und des Deckelwerkzeugs 40 nur zuzulassen, wenn die Gehäuseüberwachungsvorrichtung detektiert, dass sich das Gehäuse 100 im Schließzustand befindet. Hieraus resultiert eine besonders hohe Arbeitssicherheit, ohne dass aufwändige zusätzliche Überwachungseinrichtungen an der Vorrichtung erforderlich wären, die bei einem Zugriff eines Bedieners auf diese beiden Komponenten diese Komponenten außer Funktion setzen würden.

Im gezeigten Ausführungsbeispiel der erfindungsgemäßen Vorrichtung 200 bildet die Platinenbeladeeinheit 80 zwei Aufnahmefächer für die beiden (in der Regel) unterschiedlich dimensionierten Schildplatinen 1 eines Pärchens von Kfz-Kennzeichenschildern 500 aus.

Weiterhin weist die gezeigte Vorrichtung 200 eine Beladungsüberwachungseinrichtung, die dazu eingerichtet ist, den Beladungszustand der in der Platinenbeladeeinheit 80 ausgebildeten zwei Aufnahmefächer mit Schildplatinen 1 zu detektieren. Im gezeigten Ausführungsbeispiel erfasst die Beladungsüberwachungseinrichtung den Beladungszustand der Platinenbeladeeinheit 80 auf optischem Wege mittels zweier Lichtschranken, die jeweils ein Aufnahmefach überwachen. Der Beladungszustand wird detektiert und an die zentrale Steuereinheit 50 übermittelt, wenn sich die Platinenbeladeeinheit 80 in der Entnahmeposition befindet.

Die Vorrichtung gemäß Ausführungsbeispiel umfasst diese weiterhin eine erste Verriegelungseinheit, die dazu eingerichtet ist, die Platinenbeladeeinheit 80 in der Entnahmeposition zu arretieren.

Indem die zentrale Steuereinheit 50 dazu eingerichtet ist, die erste Verriegelungseinheit so anzusteuern, dass die Platinenbeladeeinheit 80 in der Entnahmeposition arretiert wird, wenn die Beladungsüberwachungseinrichtung detektiert, dass die Aufnahmefächer jeweils mit einer Schildplatine 1 bestückt sind, wird die Arbeits- und Manipulationssicherheit nochmals verbessert.

Weiterhin ist die zentrale Steuereinheit 50 dazu eingerichtet ist, eine Betätigung der ersten Umsetzeinheit 70 nur freizugeben, wenn die Beladungsüberwachungseinrichtung detektiert, dass beide Aufnahmefächer jeweils mit einer (ungeprägten) Schildplatine 1 bestückt sind.

Im gezeigten Ausführungsbeispiel ist die erste Umsetzeinheit 70 mit einer Linearführung versehen, so dass die beiden Schildplatinen 1 beim Umsetzen von der Platinenbeladeeinheit 80 in das Deckelwerkzeug 40 in horizontaler Richtung eine reine Linearbewegung ausführen.

Die erfindungsgemäße Vorrichtung 200 gemäß des Ausführungsbeispiels umfasst eine zweite Verriegelungseinheit, die dazu eingerichtet ist, die Platinenbeladeeinheit 80 in der Aufnahmeposition zu arretieren. Im gezeigten Ausführungsbeispiel übernimmt ein motorischer Riemenantrieb der rein linear geführten Platinenbeladeeinheit 80 die Funktion sowohl der ersten als auch der zweiten Verriegelungseinheit.

Weiterhin umfasst die erfindungsgemäße Vorrichtung gemäß des Ausführungsbeispiels eine am Gehäuse 100 der Vorrichtung 200 angeordnete Signaleinheit 110, die dazu eingerichtet ist, verschiedene optisch wahrnehmbare Signale für den Bediener zu erzeugen, wenn die Platinenbeladeeinheit 80 entweder in ihrer Entnahmeposition oder in ihrer Aufnahmeposition arretiert ist.

Die gezeigte erfindungsgemäße Vorrichtung 200 umfasst weiterhin zwei separat ausgebildete Entriegelungshandhaben, die für eine manuelle Betätigung durch einen Bediener der Vorrichtung vorgesehen sind. Die zentrale Steuereinheit 50 ist dazu eingerichtet ist, die erste und die zweite Verriegelungseinheit so anzusteuern, dass die in der Entnahmeposition oder Aufnahmeposition arretierte Platinenbeladeeinheit 80 freigegeben wird, wenn zumindest eine der beiden Entriegelungshandhaben betätigt wird. Dabei ist eine erste Entriegelungshandhabe als Fußschalter und eine zweite Entriegelungshandhabe als Handschalter an der Betätigung der Platinenbeladeeinheit 80 ausgebildet.

Die gezeigte Vorrichtung 200 umfasst weiterhin eine Leseeinheit 120 zum Auslesen eines an einer Schildplatine 1 angeordneten eindeutigen Identifiers, der als Barcode ausgebildet und damit optisch wahrnehmbar ausgebildet ist. Der Identifier ist mittels Laserbeschriftung an der Unterseite der Schildplatinen 1 ausgebildet.

Die zentrale Steuereinheit 50 der gezeigten Vorrichtung 200 ist dazu eingerichtet, eine Betätigung der Prägepresse 20 oder/ und des Deckelwerkzeugs 40 nur freizugeben, wenn die Leseeinheit 120 den Identifier der der Prägepresse 40 mittels des Deckelwerkzeugs 40 zuzuführenden beiden Schildplatinen 1 erfolgreich ausgelesen hat.

Zusätzlich ist das Gehäuse 100 der gezeigten Vorrichtung 200 so ausgebildet, dass es in seinem Schließzustand einen Zugriff einerseits auf das zu prägende Schildplatinenpaar in dem räumlichen Abschnitt zwischen der Leseeinheit 120 und der Prägepresse 20 und andererseits auf die Prägewerkzeugeinheit 30 verhindert.

In einer konsequenten Weiterentwicklung dieses Gedankens ist die zentrale Steuereinheit 50 der gezeigten Vorrichtung 200 dazu eingerichtet ist, eine Betätigung der Prägewerkzeugeinheit 30, der Prägepresse 20 sowie des Deckelwerkzeugs 40 nur zuzulassen, wenn die Gehäuseüberwachungsvorrichtung im gesamten Zeitraum, den das zu prägende Schildplatinenpaar benötigt, um den räumlichen Bereich ab dem Auslesen der Identifier der Schildplatinen 1 bis zum Schließen des Deckelwerkzeugs 40 stets angezeigt hat, dass sich das Gehäuse 50 im Schließzustand befindet. Um diesen Zeitraum zu bestimmen, ist eine Vorrichtung vorgesehen, mit der die Position des zu prägenden Schildplatinenpaars in der Vorrichtung 200 verfolgt wird.

Im gezeigten Ausführungsbeispiel hat die zentrale Steuereinheit 50 der Vorrichtung 200 einen schreibenden Zugriff auf eine zugeordnete Datenbank, um in der Datenbank die ausgelesenen Identifier des zu prägenden Schildplatinenpärchens sowie die in die Schildplatinen 1 zu prägende Kennzeichenlegende 2 abzulegen. Diese Datenbank ist einer staatlichen Zulassungsstelle für Kfz zugeordnet.

Die zentrale Steuereinheit 50 ist weiterhin dazu eingerichtet ist, eine Betätigung der Prägewerkzeugeinheit 30, der Prägepresse 20 sowie des Deckelwerkzeugs 40 nur dann freizugeben, wenn die zentrale Steuereinheit 50 erfolgreich die ausgelesenen Identifier des zu prägenden Schildplatinenpärchens sowie die in die Schildplatinen 1 zu prägende Kennzeichenlegende 2 in der Datenbank abgelegt hat.

Wie bereits ausgeführt ist die Vorrichtung 200 im gezeigten Ausführungsbeispiel dazu eingerichtet, in einer einzigen Betätigung der Prägepresse 20 gleichzeitig ein zusammengehörendes Paar (vorne + hinten) von Kfz-Kennzeichenschildern 500 mit identischer geprägter Kennzeichenlegende 2 herzustellen. Hierzu sind die als Klotzwerkzeuge ausgebildeten Prägewerkzeuge der Vorrichtung 200 so ausgebildet sind, dass mit ihnen in einem Prägevorgang beide der Prägepresse 20 zugleich zugeführte Schildplatinen 1 parallel mit denselben Zeichen geprägt werden können. In diesem Ausführungsbeispiel umfasst ein Prägewerkzeug also zwei Negativformen eines spezifischen zu prägenden Zeichens für eine Kfz-Kennzeichenlegende.

Weiterhin ist das Deckelwerkzeug 40 so ausgebildet, dass in dessen Belade-/Entladeposition die zwei Schildplatinen eines zusammengehörenden Schildplatinenpaars in das Deckelwerkzeug 40 eingelegt werden können. Weiterhin ist es so ausgebildet, dass das Deckelwerkzeug 40 in seiner Prägeposition diese beiden ungeprägten Schildplatinen 1 in der Prägepresse positioniert und mechanisch fixiert. In einem nächsten Verfahrensschritt wird dann mittels der Prägepresse 20 in einem Prägevorgang im Wesentlichen gleichzeitig die identische individuelle Kennzeichenlegende 2 in beide Schildplatinen 1 des Pärchens geprägt.

Zu diesem Zweck ist die Platinenbeladeeinheit 80 dazu eingerichtet sein, in der Aufnahme- und in der Entnahmeposition zwei Schildplatinen in Aufnahmefächern aufzunehmen. Weiterhin ist die erste Umsetzeinheit 70 dazu eingerichtet, die in der Platinenbeladeeinheit 80 befindlichen zwei Schildplatinen 1 aus dieser zu entnehmen und diese beiden Schildplatinen 1 in das Deckelwerkzeug 40 einzulegen. Hierzu muss sich das Deckelwerkzeug 40 in der Belade-/Entladeposition befinden.

Wie bereits erwähnt wird mit der gezeigten Vorrichtung 200 ein hohes Maß an Manipulationssicherheit erzielt, da die zentrale Steuereinheit 50 dazu eingerichtet ist, eine Betätigung der ersten Umsetzeinheit 70 nur dann zuzulassen, wenn die Beladungsüberwachungseinrichtung detektiert, dass alle Aufnahmefächer mit Schildplatinen bestückt sind.

Wie ebenfalls bereits erwähnt ist die gezeigte Vorrichtung 200 grundsätzlich dazu eingerichtet, bezüglich ihrer Kennzeichenlegende übereinstimmende Pärchen von Kfz-Kennzeichenschildern 500 herzustellen. Diese Pärchen sind im Ausführungsbeispiel für eine Verwendung an der Fahrzeugfront und am Fahrzeugheck vorgesehen sein, wobei die Schildplatinen 1 eines Pärchens verschiedene Abmessungen aufweisen. Sie weisen aber eine identische Legende auf, wobei die Abmessungen der alphanumerischen Zeichen der Legende 2 der Kennzeichenschilds 500 für die Fahrzeugfront kleiner sind als die Abmessungen der Zeichen der Legende des Kennzeichenschilds 500 für das Fahrzeugheck, da das vordere Kennzeichenschild 500 wegen der zu beachtenden nationalen Zulassungsbestimmungen eine verringerte Schildhöhe bei gleicher Schildbreite aufweist.

Im Falle von Fehlprägungen etc. eines einzelnen Schilds 500 eines Pärchens kann sich die Notwendigkeit ergeben, nur ein einzelnes Schild eines Kennzeichenschild-Pärchens nachzuprägen. Um dies zu ermöglichen, ist die zentrale Steuereinheit 50 der gezeigten Vorrichtung 200 dazu eingerichtet, auf Anforderung eines Benutzers die erste Umsetzeinheit 70 dergestalt anzusteuern, dass sie der Platinenbeladeeinheit 80 nur eine noch ungeprägte Schildplatine 1 entnimmt und diese in das Deckelwerkzeug 40 einlegt. Hierbei wird die Schildplatine 1 ausgewählt, die die Abmessungen des nachzuprägenden Kfz-Kennzeichenschilds aufweist.

In der vorstehend diskutierten Vorrichtung 200 ist das Deckelwerkzeug 40 so ausgestaltet, dass die Prägepresse 20 beim Prägen eines vom Deckelwerkzeug 40 gehaltenen Schildplatinenpärchens symmetrisch belastet wird. Das Deckelwerkzeug bildet zwei Werkzeughälften aus, nämlich eine zum beweglichen Prägestempel der Prägepresse 20 orientierte erste Werkzeughälfte und eine zur feststehenden Andruckfläche der Prägepresse 20 orientierte zweite Werkzeughälfte. Diese Werkzeughälften sind dazu ausgebildet, beim gleichzeitigen Prägen der beiden Schildplatinen 1 mittels der Prägepresse 20 die Schildplatinen 1 zwischen sich aufzunehmen und mechanisch zu halten.

Weiterhin weist die Prägepresse 20 einen linear bewegten Prägestempel auf. Dieser kann bei einer unvollständigen Belegung des Deckelwerkzeugs mit einer einzelnen zu prägenden Schildplatine 1 anstelle eines Schildplatinenpärchens außermittig belastet werden, woraus ein Kippmoment resultiert. Um dieses zu begrenzen und zu minimieren bilden im gezeigten Ausführungsbeispiel sowohl die erste als auch die zweite Werkzeughälfte des Deckelwerkzeugs 40 eine Anschlagfläche aus, die bei einer definierten Verkippung der beiden Werkzeughälften gegeneinander zur Anlage aneinander gelangen und auf diese Weise die relative Verkippung von oberer und unterer Werkzeughälfte auf einen Wert zu beschränken, der unter der typischen Dicke der zu prägenden Schildplatinen liegt. Damit wird auch das auf den Prägezylinder der Prägepresse 20 einwirkende Kippmoment begrenzt.

Die zentrale Steuereinheit 50 der diskutierten Vorrichtung 200 ist dazu eingerichtet, nur dann die erste Umsetzeinheit 70 dergestalt anzusteuern, dass sie der Platinenbeladeeinheit nur eine der dort aufgenommenen Schildplatinen entnimmt und dem Deckelwerkzeug zuführt, wenn der Benutzer oder eine weiterhin von der Vorrichtung 200 umfasste Fehlerüberwachungseinheit den Identifier einer bereits geprägten Schildplatine 1 vorab in der zentralen Steuereinheit 50 als "ungültig" markiert hat.

Die zentrale Steuereinheit 50 ist weiterhin dazu eingerichtet ist, eine geprägte Schildplatine 1, die durch einen entsprechenden Identifier als "ungültig" identifizierte ist, in der zugeordneten Datenbank mit einem korrespondierenden Flag zu kennzeichnen.

Die diskutierte Vorrichtung 200 umfasst weiterhin eine Markierungseinrichtung 130, die dazu vorgesehen ist, einen eindeutigen Identifier an einzelnen oder beiden Schildplatinen 1 des innerhalb des Gehäuses 100 der Vorrichtung 200 befindlichen Schildplatinenpärchens anzubringen. Bei diesem Identifier handelt es sich um den vorstehend beschriebenen eindeutigen Identifier, der die einzelne individuelle Schildplatine 1 kennzeichnet.

Diese Markierungseinrichtung ist im Ausführungsbeispiel als Beschriftungslaser ausgebildet, der ebenfalls von der zentralen Steuereinheit 50 angesteuert wird.

In der diskutierten Vorrichtung 200, mit der zeitgleich ein Schildplatinenpaar geprägt werden kann, ist die zentrale Steuereinheit 50 weiterhin dazu eingerichtet, nur dann die erste Umsetzeinheit 70 dergestalt anzusteuern, dass sie der Platinenbeladeeinheit 80 nur eine der dort aufgenommenen Schildplatinen 1 entnimmt und dem Deckelwerkzeug 40 zuführt, wenn der Benutzer oder die von der Vorrichtung 200 umfasste Fehlerüberwachungseinheit den Identifier einer bereits geprägten Schildplatine 1 vorab in der zentralen Steuereinheit 50 als "ungültig" markiert hat.

Eine ganz besonders hohe Fälschungssicherheit ergibt sich im gezeigten Ausführungsbeispiel dadurch, dass die Vorrichtung 200 die erste Umsetzeinheit 70 nur dann wie vorstehend beschrieben ansteuert, wenn die Vorrichtung 200 mittels der Markierungseinrichtung 130 eine weitere Schildplatine 1 mit demselben Identifier markiert hat und sich diese in der Platinenbeladeeinheit 70 befindet. Dabei ist diese weitere Schildplatine 1 bezüglich ihrer Eigenschaften (hier insbesondere Abmessungen, Farbe bzw. Reflexionsvermögen) identisch mit der als "ungültig" markierten Schildplatine 1. Die Umsetzeinheit 70 wird dann so angesteuert, dass genau diese "nachgeladene" Schildplatine 1, die also denselben Identifier wie die als "ungültig" gekennzeichnete Schildplatine 1 aufweist, mittels der Umsetzeinheit 70 aus der Platinenbeladeeinheit 80 entnommen und dem Deckelwerkzeug 40 zur Nachprägung der einen als "ungültig" identifizierten und markierten geprägten Schildplatine 1 zugeführt wird.

Schließlich umfasst die gezeigte Vorrichtung 200 weiterhin eine innerhalb des Gehäuses 100 der Vorrichtung 200 stromabwärts der Prägepresse 20 und in diesem Ausführungsbeispiel auch stromabwärts der Druckstation 60 angeordnete Vernichtungseinheit 140, die die als "ungültig" markierte Schildplatine 1 irreversibel unbrauchbar macht, indem die auf die betroffene Schildplatine 1 auflaminierte Kunststofffolie mittels Laserbestrahlung mit einer geeigneten "Ungültig"-Markierung versehen wird, z.B. einem deutlich erkennbaren Streifenmuster oder einer Beschriftung "void".

### Bezugszeichen

- 1: Schildplatine
- 2: Kennzeichenlegende
- 10: Magazin
- 20: Prägepresse
- 30: Prägewerkzeugeinheit
- 40: Deckelwerkzeug
- 42: Belade-/Entladeposition
- 44: Prägeposition
- 50: zentrale Steuereinheit
- 60: Druckstation
- 70: erste Umsetzeinheit
- 80: Platinenbeladeeinheit
- 90: zweite Umsetzeinheit
- 100: Gehäuse
- 110: Signaleinheit
- 120: Leseeinheit
- 130: Markierungseinrichtung
- 140: Vernichtungseinheit
- 200: Vorrichtung
- 500: Kennzeichenschild

## Patentansprüche

1. Vorrichtung (200) zur Herstellung von Kfz-Kennzeichenschildern (500) mit einer Schildplatine (1), die mit einer geprägten individuellen Kennzeichenlegende (2) versehen ist, mit den folgenden Merkmalen:
a. einem Magazin (10) zur Bevorratung einer Vielzahl von Prägewerkzeugen, wobei jedes Prägewerkzeug zur mechanischen Prägung der Schildplatine (1) mit zumindest einem Zeichen der individuellen Kennzeichenlegende (2) vorgesehen ist,
b. einer Prägepresse (20), die dazu eingerichtet ist, mittels einer Mehrzahl von Prägewerkzeugen in einem Prägevorgang die individuelle Kennzeichenlegende (2) in die Schildplatine (1) zu prägen,
c. einer Prägewerkzeugeinheit (30), die dazu eingerichtet ist,
i. dem Magazin (10) automatisch eine Mehrzahl von Prägewerkzeugen zu entnehmen, die benötigt werden, um die individuelle Kennzeichenlegende (2) zu prägen, und
ii. die entnommenen Prägewerkzeuge automatisch der Prägepresse (20) für eine Prägung einer in der Prägepresse (20) befindlichen Schildplatine (1) mit der individuellen Kennzeichenlegende (2) zuzuführen,
d. einem Deckelwerkzeug (40), welches eine Belade-/Entladeposition (40) und eine Prägeposition (42) einnehmen kann und welches dergestalt ausgebildet ist, dass
i. in der Belade-/Entladeposition (40) eine ungeprägte Schildplatine (1) in das Deckelwerkzeug (40) eingelegt sowie eine geprägte Schildplatine (1) aus diesem entnommen werden kann, und
ii. in der Prägeposition (42) die ungeprägte Schildplatine (1) in der Prägepresse (20) positioniert und mechanisch fixiert wird, so dass mittels der Prägepresse (20) und der von der Prägewerkzeugeinheit (30) der Prägepresse (20) zugeführten Mehrzahl von Prägewerkzeugen die individuelle Kennzeichenlegende (2) in die Schildplatine (1) geprägt werden kann, und
e. eine zentrale Steuereinheit (50), welche zur Ansteuerung der Prägewerkzeugeinheit (30), des Deckelwerkzeugs (40) sowie der Prägepresse (20) eingerichtet ist,
wobei
f. die Vorrichtung (200) weiterhin ein Gehäuse (100) umfasst, welches einen Öffnungs- und einen Schließzustand einnehmen kann, wobei das Gehäuse (100) im Schließzustand zumindest das Deckelwerkzeug (40) und die Prägepresse (20) vor einem direkten Zugriff eines Bedieners schützt.

2. Vorrichtung (200) gemäß Anspruch 1, **dadurch gekennzeichnet, dass** die Vorrichtung (200) weiterhin eine Gehäuseüberwachungsvorrichtung umfasst, die dazu eingerichtet ist zu detektieren, wenn sich das Gehäuse (100) im Schließzustand befindet.

3. Vorrichtung (200) gemäß Anspruch 2, **dadurch gekennzeichnet, dass** die zentrale Steuereinheit (50) dazu eingerichtet ist, eine Betätigung der Prägepresse (20) oder/und des Deckelwerkzeugs (40) nur zuzulassen, wenn die Gehäuseüberwachungsvorrichtung detektiert, dass sich das Gehäuse (100) im Schließzustand befindet.

4. Vorrichtung (200) gemäß Anspruch 1, **dadurch gekennzeichnet, dass** die Vorrichtung (200) weiterhin eine Leseeinheit (120) zum Auslesen eines an einer Schildplatine (1) angeordneten eindeutigen Identifiers umfasst.

5. Vorrichtung (200) gemäß Anspruch 4, **dadurch gekennzeichnet, dass** die zentrale Steuereinheit (50) dazu eingerichtet ist, eine Betätigung der Prägepresse (20) oder/ und des Deckelwerkzeugs (40) nur zuzulassen, wenn die Leseeinheit (120) den Identifier der der Prägepresse (20) mittels des Deckelwerkzeugs (40) zuzuführenden Schildplatine (1) erfolgreich ausgelesen hat.

6. Vorrichtung (200) gemäß Anspruch 1, **dadurch gekennzeichnet, dass** das Gehäuse (100) so ausgebildet ist, dass es im Schließzustand einen Zugriff auf eine zu prägende Schildplatine (1) zwischen der Leseeinheit (120) und der Prägepresse (20) verhindert.

7. Vorrichtung (200) gemäß Anspruch 1, **dadurch gekennzeichnet, dass** das Gehäuse (100) so ausgebildet ist, dass es im Schließzustand einen Zugriff auf das Magazin (10) oder/ und die Prägewerkzeugeinheit (30) verhindert.

8. Vorrichtung (200) gemäß Anspruch 4, **dadurch gekennzeichnet, dass** die zentrale Steuereinheit (50) dazu eingerichtet ist, eine Betätigung der Werkzeugeinheit oder / und der Prägepresse (20) oder / und des Deckelwerkzeugs (40) nur zuzulassen, wenn die Gehäuseüberwachungsvorrichtung im gesamten Zeitraum ab dem Auslesen des Identifiers bis zum Schließen des Deckelwerkzeugs (40) stets angezeigt hat, dass sich das Gehäuse (100) im Schließzustand befindet.

9. Vorrichtung (200) gemäß Anspruch 1, **dadurch gekennzeichnet, dass** die Vorrichtung (200) weiterhin eine Platinenbeladeeinheit (80) und eine erste Umsetzeinheit (70) umfasst, wobei
a. die Platinenbeladeeinheit (80) eine Aufnahmeposition und eine Entnahmeposition einnehmen kann und dazu eingerichtet ist, in der Aufnahmeposition zumindest eine ungeprägte Schildplatine (1) aufzunehmen und diese in eine Entnahmeposition zu überführen,
b. die erste Umsetzeinheit (70) dazu eingerichtet ist, in der Platinenbeladeeinheit (80) befindliche Schildplatinen (1) zu entnehmen, wenn sich diese in der Entnahmeposition befindet, und diese Schildplatinen (1) in das Deckelwerkzeug (40) einzulegen, wenn sich dieses in der Belade-/Entladeposition (40) befindet.

10. Vorrichtung (200) gemäß Anspruch 9, **dadurch gekennzeichnet, dass** sich in der Platinenbeladeeinheit (80) aufgenommene ungeprägte Schildplatinen (1) in der Aufnahmeposition der Platinenbeladeeinheit (80) außerhalb des Gehäuses (100) und in der Entnahmeposition der Platinenbeladeeinheit (80) innerhalb des Gehäuses (100) befinden.

11. Vorrichtung (200) gemäß Anspruch 9, **dadurch gekennzeichnet, dass** die Platinenbeladeeinheit (80) beim Übergang von der Aufnahmeposition in die Entnahmeposition eine Linearbewegung ausführt.

12. Vorrichtung (200) gemäß Anspruch 9, **dadurch gekennzeichnet, dass** die Platinenbeladeeinheit (80) als Schublade ausgebildet ist.

13. Vorrichtung (200) gemäß Anspruch 12, **dadurch gekennzeichnet, dass** die Schublade aus dem Gehäuse (100) der Vorrichtung (200) herausziehbar ausgebildet ist.

14. Vorrichtung (200) gemäß Anspruch 1, **dadurch gekennzeichnet, dass** die Platinenbeladeeinheit (80) zumindest ein Aufnahmefach für eine Schildplatine (1) ausbildet.

15. Vorrichtung (200) gemäß Anspruch 14, **dadurch gekennzeichnet, dass** die Vorrichtung (200) weiterhin eine Beladungsüberwachungseinrichtung umfasst, die dazu eingerichtet ist, den Beladungszustand der in der Platinenbeladeeinheit (80) ausgebildeten Aufnahmefächer mit Schildplatinen (1) zu detektieren.

16. Vorrichtung (200) gemäß Anspruch 15, **dadurch gekennzeichnet, dass** die Beladungsüberwachungseinrichtung so ausgebildet ist, dass der Beladungszustand detektiert wird, wenn sich die Platinenbeladeeinheit (80) in der Entnahmeposition befindet.

17. Vorrichtung (200) gemäß Anspruch 9 und 14, **dadurch gekennzeichnet, dass** die zentrale Steuereinheit (50) dazu eingerichtet ist, eine Betätigung der ersten Umsetzeinheit (70) nur zuzulassen, wenn die Beladungsüberwachungseinrichtung detektiert, dass zumindest ein Aufnahmefach mit einer Schildplatine (1) bestückt ist, bevorzugt alle Aufnahmefächer mit Schildplatinen (1) bestückt sind.

18. Vorrichtung (200) gemäß Anspruch 9, **dadurch gekennzeichnet, dass** die Vorrichtung (200) weiterhin eine erste Verriegelungseinheit umfasst, die dazu eingerichtet ist, die Platinenbeladeeinheit (80) in der Entnahmeposition zu arretieren.

19. Vorrichtung (200) gemäß Anspruch 9, 14 und 18, **dadurch gekennzeichnet, dass** die zentrale Steuereinheit (50) dazu eingerichtet ist, die erste Verriegelungseinheit so anzusteuern, dass die Platinenbeladeeinheit (80) in der Entnahmeposition arretiert wird, wenn die Beladungsüberwachungseinrichtung detektiert, dass zumindest ein Aufnahmefach mit einer Schildplatine (1) bestückt ist, bevorzugt wenn alle Aufnahmefächer mit Schildplatinen (1) bestückt sind

20. Vorrichtung (200) gemäß Anspruch 4, **dadurch gekennzeichnet, dass** die zentrale Steuereinheit (50) einen schreibenden Zugriff auf eine zugeordnete Datenbank hat, um in der Datenbank den ausgelesenen Identifier einer zu prägenden Schildplatine (1) sowie die in die Schildplatine (1) zu prägende Kennzeichenlegende (2) abzulegen.

21. Vorrichtung (200) gemäß Anspruch 20, **dadurch gekennzeichnet, dass** die zugeordnete Datenbank einer Zulassungsstelle für Kfz zugeordnet ist.

22. Vorrichtung (200) gemäß Anspruch 20, **dadurch gekennzeichnet, dass** die zentrale Steuereinheit (50) dazu eingerichtet ist, eine Betätigung der Werkzeugeinheit oder/ und der Prägepresse (20) oder/ und des Deckelwerkzeugs (40) nur zuzulassen, wenn die zentrale Steuereinheit (50) erfolgreich den ausgelesenen Identifier der zu prägenden Schildplatine (1) sowie die in die Schildplatine (1) zu prägende Kennzeichenlegende (2) in der Datenbank abgelegt hat.

23. Vorrichtung (200) gemäß Anspruch 1, **dadurch gekennzeichnet, dass** die Vorrichtung (200) weiterhin eine Markierungseinrichtung (130) umfasst, die dazu vorgesehen ist, einen eindeutigen Identifier an einer in der Vorrichtung (200) befindlichen, bevorzugt innerhalb des Gehäuses (100) der Vorrichtung (200) befindlichen, Schildplatine (1) anzubringen.

24. Vorrichtung (200) gemäß Anspruch 23, **dadurch gekennzeichnet, dass** die Markierungseinrichtung (130) einen Drucker, einen Beschriftungslaser oder eine Prägeeinheit umfasst.

25. Vorrichtung (200) gemäß Anspruch 1, **dadurch gekennzeichnet, dass** die Vorrichtung (200) weiterhin eine bevorzugt innerhalb des Gehäuses (100) der Vorrichtung (200) angeordnete Vernichtungseinheit (140) umfasst, die eine von einem Bediener der Vorrichtung (200) als "ungültig" markierte Schildplatine (1) irreversibel unbrauchbar macht.

26. Vorrichtung (200) gemäß Anspruch 1, 23 und 25, **dadurch gekennzeichnet, dass** die zentrale Steuereinheit (50) dazu eingerichtet ist, die Vernichtungseinheit (46) nur dann zur irreversiblen Unbrauchbarmachung einer mit einem individuellen Identifier versehende Schildplatine (1) ansteuert, wenn der Benutzer oder eine von der Vorrichtung (200) umfasste Fehlerüberwachungseinheit den Identifier der bereits geprägten Schildplatine (1) vorab in der Steuereinheit (50) als "ungültig" markiert hat und die Vorrichtung (200) mittels der Markierungseinrichtung (130) eine weitere Schildplatine (1) mit demselben Identifier markiert hat.

## Claims

1. An apparatus (200) for manufacturing motor vehicle license plates (500) with a plate blank (1) provided with an embossed individual license plate number (2), comprising the following features:
a. a magazine (10) for storing a plurality of embossing tools, wherein each embossing tool is provided for mechanically embossing the plate blank (1) with at least one character of the individual license plate number (2),
b. an embossing press (20) configured for embossing the individual license plate number (2) into the plate blank (1) in an embossing process by means of a plurality of embossing tools,
c. an embossing tool unit (30) configured for
i. automatically removing from the magazine (10) a plurality of embossing tools required for embossing the individual license plate number (2), and
ii. automatically feeding the removed embossing tools to the embossing press (20) for embossing a plate blank (1) located in the embossing press (20) with the individual license plate number (2),
d. a cover tool (40), which can adopt a loading/unloading position (40) and an embossing position (42) and is configured such that
i. in the loading/unloading position (40), a non-embossed plate blank (1) can be inserted into the cover tool (40) and an embossed plate blank (1) can be removed therefrom, and
ii. in the embossing position (42), the non-embossed plate blank (1) is positioned and mechanically fixed in the embossing press (20), so that the individual license plate number (2) can be embossed into the plate blank (1) by means of the embossing press (20) and the plurality of embossing tools fed from the embossing tool unit (30) to the embossing press (20), and
e. a central control unit (50) configured for controlling the embossing tool unit (30), the cover tool (40) and the embossing press (20),
wherein
f. the apparatus (200) further comprises a housing (100), which can adopt an opened and a closed state, wherein the housing (100) in the closed state protects at least the cover tool (40) and the embossing press (20) from direct access by a user.

2. The apparatus (200) according to claim 1, **characterized in that** the apparatus (200) further comprises a housing monitoring device, which is configured to detect when the housing (100) is in the closed state.

3. The apparatus (200) according to claim 2, **characterized in that** the central control unit (50) is configured to permit an actuation of the embossing press (20) or/and of the cover tool (40) only if the housing monitoring device detects that the housing (100) is in the closed state.

4. The apparatus (200) according to claim 1, **characterized in that** the apparatus (200) further comprises a reading unit (120) for reading a unique identifier disposed on the plate blank (1).

5. The apparatus (200) according to claim 4, **characterized in that** the central control unit (50) is configured to permit an actuation of the embossing press (20) or/and of the cover tool (40) only if the reading unit (120) has successfully read the identifier of a plate blank (1) to be fed to the embossing press (20) by means of the cover tool (40).

6. The apparatus (200) according to claim 1, **characterized in that** the housing (100) is configured in such a way that it prevents, in the closed state, access to a plate blank (1) to be embossed between the reading unit (120) and the embossing press (20).

7. The apparatus (200) according to claim 1, **characterized in that** the housing (100) is configured in such a way that it prevents, in the closed state, access to the magazine (10) or/and the embossing tool unit (30).

8. The apparatus (200) according to claim 4, **characterized in that** the central control unit (50) is configured to permit an actuation of the tool unit or/and of the embossing press (20) or/and of the cover tool (40) only if the housing monitoring device has always indicated, over the entire period from the reading of the identifier until the closing of the cover tool (40), that the housing (100) is in the closed state.

9. The apparatus (200) according to claim 1, **characterized in that** the apparatus (200) further comprises a blank loading unit (80) and a first transferring unit (70), wherein
a. the blank loading unit (80) can adopt a receiving position and a removal position and is configured for receiving in the receiving position at least one non-embossed plate blank (1) and for transferring the latter into a removal position,
b. the first transferring unit (70) is configured for removing plate blanks (1) located in the blank loading unit (80) if it is in the removal position, and for inserting these plate blanks (1) into the cover tool (40) when the latter is in the loading/unloading position (40).

10. The apparatus (200) according to claim 9, **characterized in that** non-embossed plate blanks (1) accommodated in the blank loading unit (80) are located outside the housing (100) in the receiving position of the blank loading unit (80) and within the housing (100) in the removal position of the blank loading unit (80).

11. The apparatus (200) according to claim 9, **characterized in that** the blank loading unit (80) carries out a linear movement during the transition from the receiving position into the removal position.

12. The apparatus (200) according to claim 9, **characterized in that** the blank loading unit (80) is configured as a drawer.

13. The apparatus (200) according to claim 12, **characterized in that** the drawer is configured so that it can be pulled out of the housing (100) of the apparatus (200).

14. The apparatus (200) according to claim 1, **characterized in that** the blank loading unit (80) forms at least one accommodating compartment for a plate blank (1).

15. The apparatus (200) according to claim 14, **characterized in that** the apparatus (200) further comprises a load monitoring device configured for detecting the loading status with plate blanks (1) of the accommodating compartments formed in the blank loading unit (80).

16. The apparatus (200) according to claim 15, **characterized in that** the load monitoring device is configured such that the loading status is detected when the blank loading unit (80) is in the removal position.

17. The apparatus (200) according to claim 9 and 14, **characterized in that** the central control unit (50) is configured for permitting an actuation of the first transferring unit (70) only if the load monitoring device detects that at least one accommodating compartment is charged with a plate blank (1), preferably that all accommodating compartments are charged with plate blanks (1).

18. The apparatus (200) according to claim 9, **characterized in that** the apparatus (200) further comprises a first locking unit configured for locking the blank loading unit (80) in the removal position.

19. The apparatus (200) according to claim 9, 14 and 18, **characterized in that** the central control unit (50) is configured for controlling the first locking unit in such a way that the blank loading unit (80) is locked in the removal position if the load monitoring device detects that at least one accommodating compartment is charged with a plate blank (1), preferably if all accommodating compartments are charged with plate blanks (1).

20. The apparatus (200) according to claim 4, **characterized in that** the central control unit (50) has a writing access to an associated database in order to store in the database the read identifier of a plate blank (1) to be embossed and the license plate number (2) to be embossed into the plate blank (1).

21. The apparatus (200) according to claim 20, **characterized in that** the associated database is associated with a motor vehicle registration office.

22. The apparatus (200) according to claim 20, **characterized in that** the central control unit (50) is configured to permit an actuation of the tool unit or/and of the embossing press (20) or/and of the cover tool (40) only if the central control unit (50) has successfully stored in the database the read identifier of the plate blank (1) to be embossed and the license plate number (2) to be embossed into the plate blank (1).

23. The apparatus (200) according to claim 1, **characterized in that** the device (200) further comprises a marking device (130) provided for attaching a unique identifier to a plate blank (1) located in the apparatus (200), preferably within the housing (100) of the apparatus (200).

24. The apparatus (200) according to claim 23, **characterized in that** the marking device (130) comprises a printer, a marking laser or an embossing unit.

25. The apparatus (200) according to claim 1, **characterized in that** the apparatus (200) further comprises a destroying unit (140), which is preferably disposed within the housing (100) of the apparatus (200) and which renders a plate blank (1) marked by a user of the apparatus (200) as "invalid" irreversibly unusable.

26. The apparatus (200) according to claim 1, 23 and 25, **characterized in that** the central control unit (50) is configured to control the destroying unit (46) to render a plate blank (1) provided with an individual identifier irreversibly unusable only if the user or an error monitoring unit included in the apparatus (200) has marked the identifier of the already embossed plate blank (1) "invalid" in advance in the control unit (50) and the apparatus (200) has marked another plate blank (1) with the same identifier by means of the marking device (130).

## Revendications

1. Dispositif (200) de fabrication de plaques d'immatriculation de véhicule automobile (500) ayant une platine de plaque (1) qui est munie d'une légende de plaque d'immatriculation (2) individuelle gaufrée, présentant les caractéristiques suivantes:
a. un magasin (10) pour stocker une pluralité d'outils de gaufrage, dans lequel chaque outil de gaufrage est prévu pour le gaufrage mécanique de la platine de plaque (1) avec au moins un caractère de la légende de plaque d'immatriculation (2) individuelle,
b. une presse à gaufrer (20) qui est configurée pour gaufrer la légende de plaque d'immatriculation (2) individuelle dans la platine de plaque (1) au moyen d'une pluralité d'outils de gaufrage dans une opération de gaufrage,
c. une unité d'outils de gaufrage (30) qui est configurée pour
i. retirer automatiquement dudit magasin (10) une pluralité d'outils de gaufrage qui sont requis pour gaufrer la légende de plaque d'immatriculation (2) individuelle, et
ii. pour amener automatiquement à la presse à gaufrer (20) les outils de gaufrage retirés pour gaufrer une platine de plaque (1) se trouvant dans la presse à gaufrer (20), avec la légende de plaque d'immatriculation (2) individuelle,
d. un outil de couverture (40) qui peut occuper une position de chargement/déchargement (40) et une position de gaufrage (42) et qui est conçu de telle sorte que,
i. dans la position de chargement/déchargement (40), une platine de plaque (1) non gaufrée peut être insérée dans l'outil de couverture (40) et une platine de plaque (1) gaufrée peut en être retirée, et
ii. dans la position de gaufrage (42), la platine de plaque (1) non gaufrée est positionnée et fixée mécaniquement dans la presse à gaufrer (20) de telle sorte que la légende de plaque d'immatriculation (2) individuelle peut être gaufrée dans la platine de plaque (1) au moyen de la presse à gaufrer (20) et de la pluralité d'outils de gaufrage qui sont amenés par l'unité d'outils de gaufrage (30) à la presse à gaufrer (20), et
e. une unité centrale de commande (50) qui est configurée pour commander l'unité d'outils de gaufrage (30), l'outil de couverture (40) ainsi que la presse à gaufrer (20),
dans lequel
f. ledit dispositif (200) comprend en outre un boîtier (100) qui peut occuper un état ouvert et un état fermé, dans lequel, à l'état fermé, le boîtier (100) protège au moins l'outil de couverture (40) et la presse à gaufrer (20) d'un accès direct par un opérateur.

2. Dispositif (200) selon la revendication 1, **caractérisé par le fait que** le dispositif (200) comprend en outre un dispositif de surveillance de boîtier qui est conçu pour détecter que le boîtier (100) est à l'état fermé.

3. Dispositif (200) selon la revendication 2, **caractérisé par le fait que** l'unité centrale de commande (50) est configurée pour n'autoriser un actionnement de la presse à gaufrer (20) et/ou de l'outil de couverture (40) que lorsque le dispositif de surveillance de boîtier détecte que le boîtier (100) est à l'état fermé.

4. Dispositif (200) selon la revendication 1, **caractérisé par le fait que** le dispositif (200) comprend en outre une unité de lecture (120) destiné à lire un identifiant unique disposé sur une platine de plaque (1).

5. Dispositif (200) selon la revendication 4, **caractérisé par le fait que** l'unité centrale de commande (50) est configurée pour n'autoriser un actionnement de la presse à gaufrer (20) et/ou de l'outil de couverture (40) que lorsque l'unité de lecture (120) a lu avec succès l'identifiant de la platine de plaque (1) à amener à la presse à gaufrer (20) au moyen de l'outil de couverture (40).

6. Dispositif (200) selon la revendication 1, **caractérisé par le fait que** le boîtier (100) est conçu de telle sorte que, à l'état fermé, il empêche un accès à une platine de plaque (1) à gaufrer entre ladite unité de lecture (120) et la presse à gaufrer.

7. Dispositif (200) selon la revendication 1, **caractérisé par le fait que** le boîtier (100) est conçu de telle sorte que, à l'état fermé, il empêche un accès au magasin (10) et/ou à l'unité d'outils de gaufrage (30).

8. Dispositif (200) selon la revendication 4, **caractérisé par le fait que** l'unité centrale de commande (50) est configurée pour n'autoriser un actionnement de l'unité d'outils et/ou de la presse à gaufrer (20) et/ou de l'outil de couverture (40) que si le dispositif de surveillance de boîtier a signalé toujours, pendant toute la période allant de la lecture de l'identifiant jusqu'à la fermeture de l'outil de couverture (40), que le boîtier (100) est à l'état fermé

9. Dispositif (200) selon la revendication 1, **caractérisé par le fait que** le dispositif (200) comprend en outre une unité de chargement de platine (80) et une première unité de déplacement (70), dans lequel
a. l'unité de chargement de platine (80) peut occuper une position de réception et une position de retrait et est configurée pour recevoir au moins une platine de plaque (1) non gaufrée dans la position de réception et pour transférer celle-ci dans une position de retrait,
b. la première unité de déplacement (70) est configurée pour retirer des platines de plaque (1) se trouvant dans l'unité de chargement de platine (80) lorsque celle-ci se trouve dans la position de retrait, et pour insérer ces platines de plaque (1) dans l'outil de couverture (40) lorsque celui-ci se trouve dans la position de chargement/déchargement (42).

10. Dispositif (200) selon la revendication 9, **caractérisé par le fait que** des platines de plaque (1) non gaufrées reçues à l'intérieur de l'unité de chargement de platine (80) se trouvent à l'extérieur du boîtier (100) lorsque l'unité de chargement de platine (80) se trouve dans la position de réception et se trouvent à l'intérieur du boîtier (100) lorsque l'unité de chargement de platine (80) se trouve dans la position de retrait.

11. Dispositif (200) selon la revendication 9, **caractérisé par le fait que** l'unité de chargement de platine (80) exécute un mouvement linéaire lorsqu'elle passe de la position de réception à la position de retrait.

12. Dispositif (200) selon la revendication 9, **caractérisé par le fait que** l'unité de chargement de platine (80) est réalisée en tant que tiroir.

13. Dispositif (200) selon la revendication 12, **caractérisé par le fait que** le tiroir est conçu de manière à pouvoir être retiré du boîtier (100) du dispositif (200).

14. Dispositif (200) selon la revendication 1, **caractérisé par le fait que** l'unité de chargement de platine (80) forme au moins un compartiment de réception pour une platine de plaque (1).

15. Dispositif (200) selon la revendication 14, **caractérisé par le fait que** le dispositif (200) comprend en outre un dispositif de surveillance de chargement qui est conçu pour détecter l'état de chargement des compartiments de réception de platines de plaque (1), réalisés dans l'unité de chargement de platine (80).

16. Dispositif (200) selon la revendication 15, **caractérisé par le fait que** le dispositif de surveillance de chargement est conçu de telle sorte que l'état de chargement est détecté lorsque l'unité de chargement de platine (80) est en position de retrait.

17. Dispositif (200) selon la revendication 9 et 14, **caractérisé par le fait que** l'unité centrale de commande (50) est configurée pour n'autoriser un actionnement de la première unité de déplacement (70) que lorsque le dispositif de surveillance de chargement détecte qu'au moins un compartiment de réception est équipé d'une platine de plaque (1), de préférence que l'ensemble des compartiments de réception sont équipés de platines de plaque (1).

18. Dispositif (200) selon la revendication 9, **caractérisé par le fait que** le dispositif (200) comprend en outre une première unité de verrouillage qui est configurée pour arrêter l'unité de chargement de platine (80) dans la position de retrait.

19. Dispositif (200) selon la revendication 9, 14 et 18, **caractérisé par le fait que** l'unité centrale de commande (50) est conçue pour commander la première unité de verrouillage de telle sorte que l'unité de chargement de platine (80) est arrêtée en position de retrait lorsque le dispositif de surveillance de chargement détecte qu'au moins un compartiment de réception est équipé d'une platine de plaque (1), de préférence lorsque tous les compartiments de réception sont équipés de platines de plaque (1).

20. Dispositif (200) selon la revendication 4, **caractérisé par le fait que** l'unité centrale de commande (50) dispose d'un accès en écriture à une base de données associée afin de stocker dans ladite base de données l'identifiant lu d'une platine de plaque (1) à gaufrer ainsi que la légende de plaque d'immatriculation (2) à gaufrer dans la platine de plaque (1).

21. Dispositif (200) selon la revendication 20, **caractérisé par le fait que** la base de données associée est associée à un bureau des immatriculations pour véhicules automobiles.

22. Dispositif (200) selon la revendication 20, **caractérisé par le fait que** l'unité centrale de commande (50) est configurée pour n'autoriser un actionnement de l'unité d'outils et/ou de la presse à gaufrer (20) et/ou de l'outil de couverture (40) que lorsque l'unité centrale de commande (50) a stocké avec succès, dans la base de données, l'identifiant lu de la platine de plaque (1) à gaufrer ainsi que la légende de plaque d'immatriculation (2) à gaufrer dans platine de plaque (1).

23. Dispositif (200) selon la revendication 1, **caractérisé par le fait que** le dispositif (200) comprend en outre un dispositif de marquage (130) qui est prévu pour appliquer un identifiant unique sur une platine de plaque (1) se trouvant à l'intérieur du dispositif (200), de préférence à l'intérieur du boîtier (100) du dispositif (200).

24. Dispositif (200) selon la revendication 23, **caractérisé par le fait que** le dispositif de marquage (130) comprend une imprimante, un laser à marquer ou une unité de gaufrage.

25. Dispositif (200) selon la revendication 1, **caractérisé par le fait que** le dispositif (200) comprend en outre une unité de destruction (140) qui, de préférence, est disposée à l'intérieur du boîtier (100) du dispositif (200) et qui rend irréversiblement inutilisable une platine de plaque (1) qui a été marquée comme étant "invalide" par un opérateur du dispositif (200).

26. Dispositif (200) selon la revendication 1, 23 et 25, **caractérisé par le fait que** l'unité centrale de commande (50) est configurée pour ne commander l'unité de destruction (46) de rendre irréversiblement inutilisable une platine de plaque (1) pourvue d'un identifiant individuel que lorsque l'utilisateur ou une unité de surveillance d'erreurs incluse dans le dispositif (200) a marqué à l'avance, dans l'unité de commande (50), l'identifiant de la platine de plaque (1) déjà gaufrée comme étant "invalide" et que le dispositif (200) a marqué, au moyen du dispositif de marquage (130), une autre platine de plaque (1) du même identifiant.
